# EUROPEAN PATENT APPLICATION

(11) **EP 2 604 497 A1**
(43) Date of publication of application: **19.06.2013**
(21) Application number: 11193610.0
(22) Date of filing: 14.12.2011
(51) Int. Cl.: B62K 3/00

(54) **Scooter**

(71) Applicant: Mondo S.p.A., 12051 Alba Frazione Gallo (CN) (IT)
(72) Inventor: Stroppiana, Marco, 12051 Fraz. Gallo, Alba (Cuneo) (IT)
(74) Representative: Frontoni, Stefano

(57) **Abstract**

A scooter comprising:
- a main body (2) defining a resting surface for the feet of a user;
- a front wheel (6);
- steering means (8) designed to connect the front wheel to the main body in such a way that it can turn about a steering axis (I) substantially transverse to said resting surface (4); and
- a rear wheel (12) connected to said main body (2). The wheels (6, 12) of the scooter are without hubs.

## Description

The present invention relates to a scooter of the type comprising:
- a main body defining a resting surface for the feet of a user;
- a front wheel;
- steering means designed to connect said front wheel to said main body in such a way that it can turn about a steering axis substantially transverse to said resting surface; and
- a rear wheel connected to said main body.

The scooters present on the market have both wheels of small diameter, generally from 10 to 12 cm, coated with polyurethane and wheels of larger diameter
- from 12 cm up - coated with polyurethane, rubber, or else having tyres with or without innertubes. In general, scooters with wheels of small diameter are more stable, whereas those with larger wheels run more smoothly but are more difficult to manoeuvre.

In this context, the object of the present invention is to provide a scooter characterized by a completely innovative configuration, particularly suited for envisaging wheels of "large" diameter, preferably from 15 cm up.

According to the invention, the aforesaid object is achieved thanks to a scooter having the characteristics recalled in one or more of the ensuing claims.

The claims form an integral part of the technical teaching provided herein in relation to the invention.

The invention will now be described, purely by way of non-limiting example, with reference to the annexed representations, in which:
- Figure 1 illustrates a perspective view of an embodiment of the scooter described herein; and

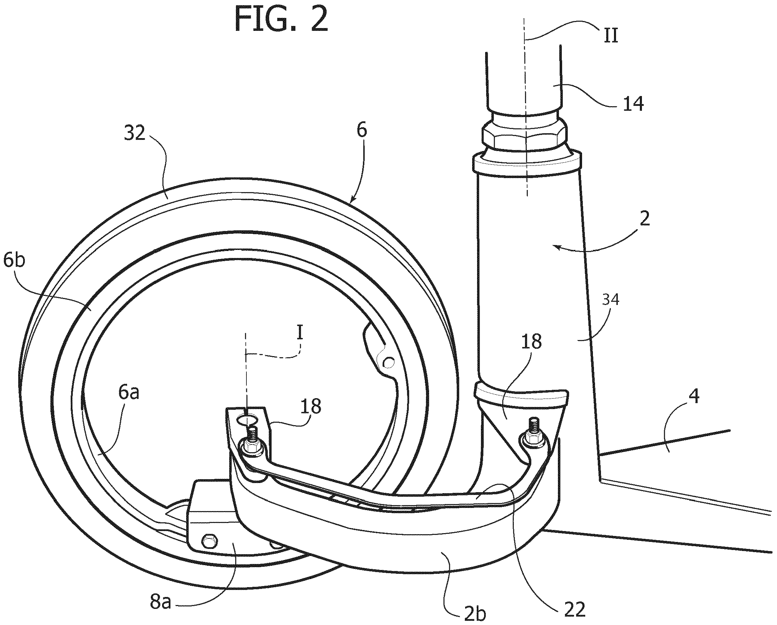

- Figures 2 to 4 illustrate a detail of the front part of the scooter, in different positions.

In the ensuing description, various specific details are illustrated aimed at an in-depth understanding of the embodiments. The embodiments may be provided without one or more of the specific details, or with other methods, components, materials, etc. In other cases, structures, materials, or operations that are known have not been described in detail so that various aspects of the embodiments will not be obscured.

The references used herein are merely for convenience and hence do not define the sphere of protection of the embodiments.

The scooter described herein is designated in the figures by the reference number 10. In general, it comprises:
- a main body 2 defining a resting surface 4 for the feet of a user;
- a front wheel 6;
- steering means 8 designed to connect the front wheel to the main body in such a way that it can turn about a steering axis I substantially transverse to the resting surface 4; and
- a rear wheel 12 connected to said main body. In particular, in the scooter described herein the front wheel 6 and the rear wheel 12 are mounted on the main body so as to be in line with one another.

According to an important characteristic of the scooter described herein, one or both of the wheels 6 and 12 are without hubs. In various embodiments, as in the one illustrated, each wheel comprises an inner ring (designated by 6a for the front wheel and by 12a for the rear wheel), or similar structure, connected to the main body 2 in such a way that it cannot turn about its own axis, and an outer ring (designated by 6b for the front wheel and 12b for the rear wheel), or similar structure, mounted concentric on the inner ring via the interposition of bearing means (not shown) so as to be rotatable about its own axis. The outer ring bears the coating - for example, a rubber coating or a tyre - defining the tread of the wheel, designated by the reference number 32 for both of the wheels. The bearing means can be of any type known to the person skilled in the branch, suited for the purposes indicated, for example rolling bearings of the roller-bearing or ball-bearing type.

In various embodiments, as in the one illustrated, the inner ring 12a of the rear wheel is rigidly connected to the main body, whilst the inner ring 6a of the front wheel is connected to the main body in such a way that it can turn about the first steering axis I, via the aforesaid steering means.

In preferred embodiments, the main body 2 is connected to the two wheels 6 and 12 within their respective inner rings 6a, 12a. In various embodiments, as in the one illustrated, the main body has a connection portion 2a directly fixed to a corresponding portion of the inner ring 12a, which is located, preferably, underneath the ideal axis of rotation of the wheel. In a similar way, in various embodiments the steering means have a connection portion 8a directly fixed to a corresponding portion of the inner ring 6a, which is located, preferably, underneath the ideal axis of rotation of the wheel. The preferred configuration referred to above causes the points of transmission of the weight from the body 2 to the wheels 6 and 12 to be located underneath the ideal axis of rotation of the latter, this bestowing greater stability upon the means. It should be noted that the connection portions referred to above can be of any type in itself already known in said field, and will consequently not be described herein in detail for reasons of simplicity of treatment. In various embodiments, the connection between the parts can for example be obtained via bolts; in this case, the portions for connection of the inner rings can be thickened and perforated parts of the ring, provided for receiving fixing bolts, and the portions for connection of the steering means and of the main body can present corresponding holes for engagement by said bolts.

In various embodiments, as in the one illustrated, the inner ring 6a of the front wheel is connected to the main body in such a way that it can turn about the aforesaid first steering axis I, whilst the steering means comprise a rod or handlebar tube 14, which is mounted so that it can turn on the main body about a second steering axis II, once again transverse to the plane 4 but distinct from the first axis I. In particular, the second steering axis is closer to the resting surface 4 than the first axis. In a way in itself known in the art, the rod or tube 14 is mounted so that it can turn about the first axis I within a sleeve portion 34 of the main body 2. It should be noted that the configuration referred to above enables equipping the scooter with a front wheel of large diameter, at the same time maintaining an ergonomic configuration of the body of the scooter and of the handlebar that enables the user to assume a riding position that is substantially the same as the one typically adopted in scooters with wheels of small diameter. In particular, in various embodiments, as in the one illustrated, the resting surface 4 is relatively close to the ground, and the rod of the handlebar, or rather the sleeve portion 34 that receives it, is set immediately up against the front end of said surface, preferably the rod of the handlebar assuming an orientation substantially orthogonal to the resting surface itself. In various embodiments, as in the one illustrated, the first and second steering axes are substantially parallel to one another and preferably contained in the same ideal plane containing also the wheel 6.

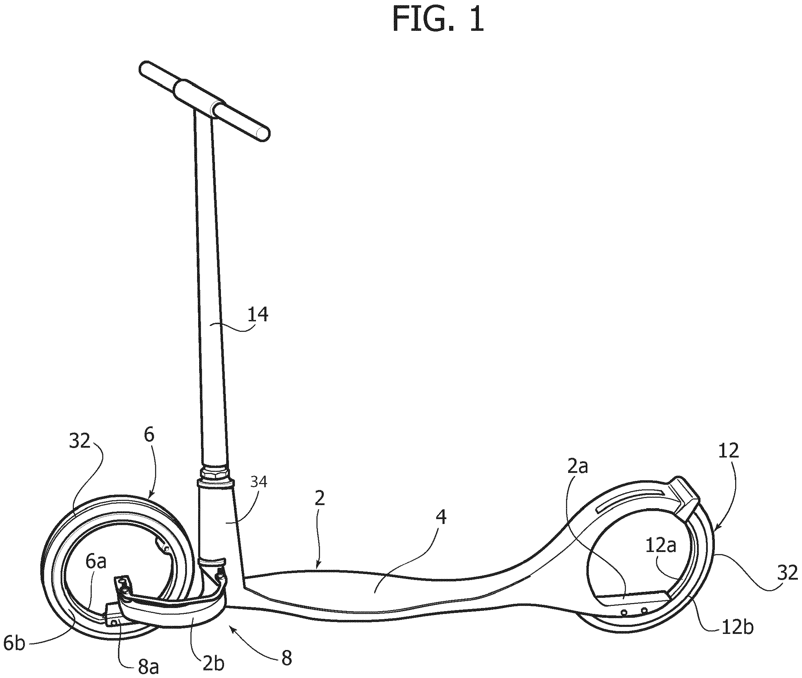

In various particularly preferred embodiments, the distance between the first and second steering axes in a longitudinal direction of the main body is such that the front wheel falls almost tangential to the sleeve portion of said body (not having, obviously, to come into contact therewith). As may be seen from Figure 1, the configuration that derives therefrom is extremely compact.

In various embodiments, such as the one illustrated, the steering means 8 comprise a mechanism for transmission of the motion designed to turn the inner ring of the front wheel about the first axis I as a result of rotation of the handlebar about the second axis II.

In various preferred embodiments, as in the one illustrated, said transmission mechanism is of the four-bar-linkage type in which the first and second steering axes correspond to the two fixed articulation points of the linkage. In various preferred embodiments, as in the one illustrated, the transmission mechanism is of the drag-link type, in which rotatably mounted about the first and second steering axes respectively are two cranks 18 of equal length in such a way that to a rotation of the handlebar 14 about the second axis II there corresponds a rotation by the same amount of the inner ring 6a about the first axis I.

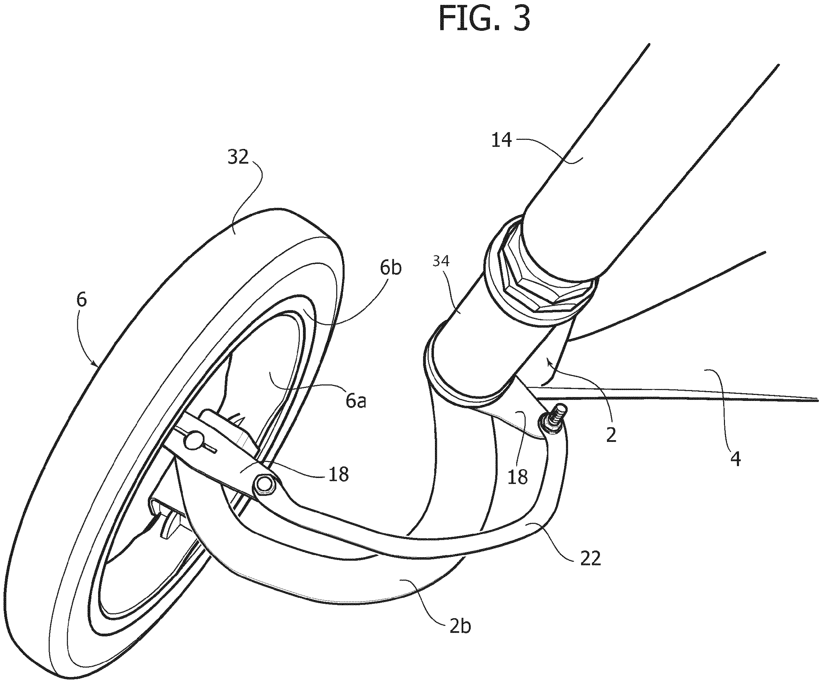

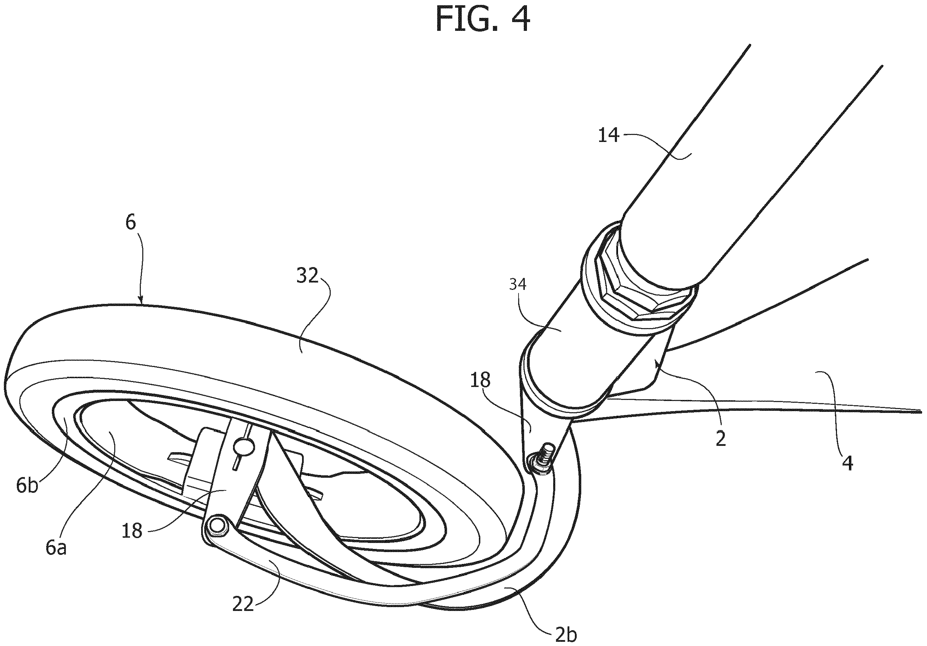

In the embodiments in which the main body 2 is connected to the front wheel within the ring 6a, the main body comprises an arm 2b projecting at the front, which has a substantially C shape in top plan view, and the distal end of which falls within the front wheel and carries the first steering axis I. In this case, the rod of the four-bar linkage (designated by the reference 22), which connects the two cranks 18, has a profile in top plan view substantially corresponding to the C shape of the front arm, and is set in a position corresponding to said arm, above or underneath it. Figures 3 and 4 illustrate the configuration of said mechanism in the two end angular positions of the front wheel. As may be seen from Figures 3 and 4, the C-shaped profile of both, i.e., the arm 2b and the rod 22, is such as to enable a given desired steering angle to be reached, also in the direction of steering concordant with the curvature of said profile from the base towards its end (clockwise direction as viewed in the figures), and without causing the wheel to be touched by the rod 22 and/or the arm 2b. In this connection, in various embodiments, the steering means comprise an appropriate member (not shown) designed to limit the steering angle of the front wheel so as to prevent this from coming into contact with the rod 22 or else with the arm 2b.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims. In this connection, it should be noted that the various configurations illustrated above for both of the wheels 6 and 8 can in actual fact be envisaged also for just one of said wheels. For example, it is possible to envisage just the front wheel 6 without a hub, in association with the steering means 8 referred to above, or else just the rear wheel 12.

## Claims

**1.** A scooter comprising:
- a main body (2) defining a resting surface for the feet of a user;
- a front wheel (6);
- steering means (8) designed to connect the front wheel to the main body in such a way that it can turn about a steering axis (I) substantially transverse to said resting surface (4); and
- a rear wheel (12) connected to said main body (2);
said scooter being **characterized in that** said front and/or rear wheels (6, 12) are without hubs.

**2.** The scooter according to Claim 1, wherein said front wheel comprises an inner ring (6a), or similar structure, connected to said main body (2) in such a way that it cannot turn about its own axis, and an outer ring (6b), or similar structure, mounted concentric on said inner ring via the interposition of bearing means so as to be rotatable about its own axis, wherein the inner ring of said front wheel is connected to said main body in such a way that it can turn about said steering axis (I) via said steering means (8).

**3.** The scooter according to Claim 2, wherein said rear wheel comprises an inner ring (12a), or similar structure, connected to said main body (2) in such a way that it cannot turn about its own axis, and an outer ring (12b), or similar structure, mounted concentric on said inner ring via the interposition of bearing means, so as to be rotatable about its own axis, wherein the inner ring of said rear wheel is rigidly connected to said main body.

**5.** The scooter according to Claim 1, wherein said rear wheel comprises an inner ring (12a), or similar structure, connected to said main body (2) in such a way that it cannot turn about its own axis, and an outer ring (12b), or similar structure, mounted concentric on said inner ring via the interposition of bearing means so as to be rotatable about its own axis, wherein the inner ring of said rear wheel is rigidly connected to said main body.

**6.** The scooter according to Claim 2, wherein said main body is connected to said front wheel within its respective inner ring (6a), and preferably wherein said steering means have a connection portion (8a) directly fixed to a corresponding portion of the inner ring of said front wheel, which is located underneath the ideal axis of rotation of said front wheel.

**7.** The scooter according to Claim 5, wherein said main body is connected to said rear wheel within its respective inner ring (12a), and preferably wherein the main body (2) has a connection portion (2a) directly fixed to a corresponding portion of the inner ring of the rear wheel (12), which is located underneath the ideal axis of rotation of said rear wheel.

**8.** The scooter according to Claim 3, wherein said main body is connected to said front and rear wheels within their respective inner rings (6a, 12a).

**9.** The scooter according to any one of Claims 3 and 8, wherein the main body (2) has a connection portion (2a) directly fixed to a corresponding portion of the inner ring of the rear wheel (12), which is located underneath the ideal axis of rotation of said rear wheel, and wherein said steering means have a connection portion (8a) directly fixed to a corresponding portion of the inner ring of said front wheel, which is located underneath the ideal axis of rotation of said front wheel.

**10.** The scooter according to any one of Claims 2 to 9, wherein said inner ring (6a) of said front wheel (6) is connected to said main body (2) in such a way that it can turn about a first steering axis (I) substantially transverse to said resting surface, and said steering means comprise a rod or handlebar tube (14) mounted so that it can turn on said main body (2) about a second steering axis (II), once again transverse to said resting surface but distinct from said first steering axis (I).

**11.** The scooter according to Claim 10, wherein said second steering axis (II) is set closer to said resting surface than said first steering axis (I), in a longitudinal direction of said main body.

**12.** The scooter according to Claim 10 or Claim 11, wherein said first and second steering axes are substantially parallel to one another.

**13.** The scooter according to any one of Claims 10 to 12, wherein said steering means comprise a mechanism for transmission of motion designed to drive in rotation said inner ring of said front wheel about said first axis (I) as a result of rotation of said handlebar or handlebar rod (14) about said second axis (II).

**14.** The scooter according to Claim 13, wherein said transmission mechanism is of the four-bar-linkage type or the like, wherein said first and second steering axes (I, II) correspond to the two fixed articulation points of the linkage.

**15.** The scooter according to Claim 14, wherein said main body (2) comprises an arm projecting at the front (2b), which has a substantially C shape in top plan view and the distal end of which falls within said inner ring (6a) of said front wheel, and carries said first steering axis (I).
